Europäisches Patentamt

European Patent Office

Office européen des brevets

(11) Veröffentlichungsnummer: **0 267 153**
**B1**

(12) **EUROPÄISCHE PATENTSCHRIFT**

(45) Veröffentlichungstag der Patentschrift: 09.01.91

(51) Int. Cl.⁵: **F 16 B 25/00**

(21) Anmeldenummer: **87810615.2**

(22) Anmeldetag: **26.10.87**

(54) Schraube zur Abstandsbefestigung von Bauteilen.

(30) Priorität: **03.11.86 CH 4341/86**

(43) Veröffentlichungstag der Anmeldung:
**11.05.88 Patentblatt 88/19**

(45) Bekanntmachung des Hinweises auf die
Patenterteilung:
**09.01.91 Patentblatt 91/02**

(84) Benannte Vertragsstaaten:
**AT BE CH DE ES FR GB GR IT LI LU NL SE**

(56) Entgegenhaltungen:
**CH-A- 614 761**
**DD-A- 236 563**
**DE-A-1 400 805**
**DE-U-6 935 044**
**DE-U-8 030 803**
**FR-A-1 133 915**

(73) Patentinhaber: **Ferronorm AG**
**Hauptstrasse 85**
**CH-5734 Reinach (CH)**

(72) Erfinder: **Wicki, Heinrich**
**Bruchmatthalde 3**
**CH-6003 Luzern (CH)**

(74) Vertreter: **White, William et al**
**Isler AG Patentanwalts-Bureau Walchestrasse**
**23**
**CH-8006 Zürich (CH)**

Courier Press, Leamington Spa, England.

# Beschreibung

Schrauben mit zwei Gewindeteilen auf demselben Bolzen sind bekannt. An der einen Endpartie hat der Bolzen einen geringeren Durchmesser als an der andern Endpartie, die Steigungen der Gewinde sind jedoch gleich. Damit können zwei Holzbauteile in gleichbleibendem Abstand voneinander festgeschraubt werden.

Gemäss einer ersten bekannten Ausführungsform nach der DE—A—14 00 805 weist der Gewindeteil am dünneren Bolzenende ein Gewinde auf, das nicht über den Durchmesser des Bolzens hinausragt und das Gewinde am dickeren Teil hat einen grösseren Durchmesser als der Bolzen. Es hat sich gezeigt, dass in gewissen Fällen durch das Gewinde am dickeren Ende des Bolzens das Holz der Verschalung aufgeworfen wird und damit unansehnliche Buckel entstehen, die dann durch zusätzliche Bearbeitung zu entformen sind. Vielfach können sich im Holz durch die zu dicken Schrauben Risse bilden, so dass dann die Verschalung im schlimmsten Fall zu ersetzen ist.

Zur Abhilfe dieser Nachteile wird in der CH—A—614 761 vorgeschlagen am konischen Uebergangsteil wenigstens zwei Spannuten anzubringen. Durch Zerspanen des Materials in der Bohrung der Verschalung wird dieses ausgeweitet, so dass die materialverdrängende Wirkung des dickeren Gewindeteils eliminiert sein soll.

Bei der Herstellung solcher Schrauben werden üblicherweise die Gewinde gefräst, so dass Abfallmaterial entsteht, das in Rechnung zu stellen ist. Spannuten, wie vorgeschlagen, müssen zusätzlich in axialer Richtung in das dickere Gewindeteil eingefräst werden. Dies verteuert die Schrauben soweit, dass vergleichsweise die Herstellung eines solchen Gewindes mit Spannuten doppelt soviel Kosten verursacht wie ein aufgerolltes Gewinde ohne Spannuten.

Bekannt ist aus einem Prospekt "Die Reisser-Spanplattenschrauben" aus dem Jahr 1982, dass für Spanplatten ein Flankenwinkel von 40° vorgeschlagen wurde ebenso wurde im Entwurf zu DIN 7505 Seite 3 der Flankenwinkel bei Spannplattenschrauben mit 40° angegeben. Dieser Entwurf stammt aus dem Jahr 1986. Die Vorteile eines solchen Gewindes liegen darin, dass die Schraube ein Gewinde in das Material furcht und damit das Holz nicht zerreisst. Wogegen für gewöhnliche Holzschrauben ein Flankenwinkel von 60° vorgeschrieben ist (DIN 7998 vom Februar 1975).

Es ist deshalb eine Aufgabe der Erfindung, bei einer Schraube der genannten Art Mittel vorzusehen, mit denen ein Aufwölben oder Spalten der Verschalung verhindert werden kann, aber keine oder höchstens eine unmassgebliche Verteuerung der Materialkosten zur Folge hat und zudem das kostengünstigere Aufrollen des Gewindes gestattet.

Erfindungsgemäss wird dies durch die Definition im Patentanspruch 1 bewirkt.

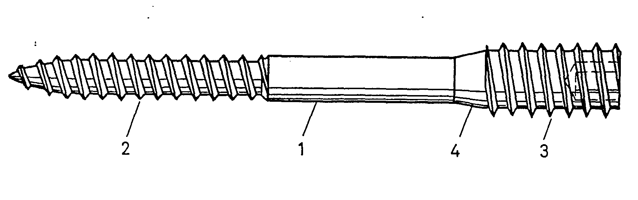

Ein Ausführungsbeispiel der Erfindung wird nachfolgend anhand der Zeichnung erläutert. In der einzigen Figur ist eine Draufsicht auf eine Schraube dargestellt.

Die erfindungsgemässe Schraube besteht aus einem Bolzen 1 auf den einerends ein erster Gewindeteil 2 mit wenigstens angenähert gleichem Aussendurchmesser des Gewindes wie der Durchmesser des Bolzens aufgerollt ist. Anderennends ist der Bolzen verdickt und trägt einen zweiten Gewindeteil 3. Stirnseitig ist ein Innensechskant eingepresst um die Schraube mit einem Schlüssel eindrehen zu können. Der dünnere Gewindeteil 2 endet in bekannter Weise in einer Spitze. Als Gewinde ist ein Holzgewinde vorgesehen, wie es für Schrauben bei Verwendung von Dübeln üblich ist.

Der Gewindeteil 3 hat ein Gewinde mit gleicher Steigung, jedoch sind hierbei die Flanken der Gewindegänge sehr steil und die Spitzen scharfkantig, so dass ein Schneidegewinde entsteht, wie es üblicherweise für Schrauben in Verbindung mit Spanplatten Verwendung findet.

Es hat sich gezeigt, dass bei einem solchen Schneidegewinde das Aufwerfen des Materials nicht vorkommt. Aber im Gegensatz zu den bekannten Schrauben dieser Art erhöht sich der Ausreisswiderstand erheblich.

Anstelle des Spanplatten-Schraubengewindes könnte auch ein Hoch-Tief-Gewinde verwendet werden.

In beiden Fällen erstreckt sich das Gewinde des dickeren Gewindeteils bis in das Gebiet des Konus hinein.

## Patentansprüche

1. Schraube zur Abstandsbefestigung von Bauteilen, mit einem ersten dünneren Gewindeteil (2) und einem zweiten dickeren Gewindeteil (3), die beide gleiche Gewindeganghöhen aufweisen und mit einem Konusteil (4) an der Uebergangsstelle zwischen dünnerem und dickerem Gewindeteil (2, 3), dadurch gekennzeichnet, dass der Konusteil im wesentlichen Gewindelos ist und dass das Gewinde des dickeren Gewindeteils (3) ein scharfkantiges Schneidegewinde ist, bei dem die Flanken einen spitzen Winkel wie bei Schrauben für Spanplatten bilden.

2. Schraube nach Patentanspruch 1, dadurch gekennzeichnet, dass das Schneidegewinde auf dem dickeren Gewindeteil (3) sich bis in das Gebiet des Konusteils (4) erstreckt.

3. Schraube nach Patentanspruch 1 oder 2, dadurch gekennzeichnet, dass das Schneidegewinde ein Spanplatten-Schraubengewinde ist.

## Revendications

1. Vis pour la fixation à distance d'éléments de construction, munie d'une première partie filetée mince (2) et d'une seconde partie filetée épaisse (3), lesquelles présentent toutes deux des pas de filetage identiques, ainsi que d'une partie conique (4) sur la zone de transition entre la partie filetée mince et la partie filetée épaisse (2, 3), caractérisée en ce que la partie conique pour l'essentiel exempte de filetage, et en ce que le filetage de la partie filetée épaisse (3) est un filetage tranchant à arête vive dans lequel les flancs forment un angle aigu comme c'est le cas pour les vis destinées aux panneaux d'agglomérés.

2. Vis selon la revendication 1, caractérisée en ce que le filetage tranchant s'étend sur la partie filetée épaisse (3) jusque dans la zone de la partie conique (4).

3. Vis selon la revendication 1 ou 2, caractérisée en ce que le filetage tranchant est un filetage de vis pour panneaux d'agglomérés.

**Claims**

1. Screw for attaching components with spacing, having a first thinner threaded part (2) and a second thickener threaded part (3), which both have the same thread pitches, and having a conical part (4) at the transition point between the thinner and the thicker threaded parts (2, 3), characterized in that the conical part is essentially unthreaded, and in that the thread of the thicker threaded part (3) is a sharp-edged cutting thread, in which the flanks form an acute angle as with screws used for chipboard.

2. Screw according to Patent Claim 1, characterized in that the cutting thread on the thicker threaded part (3) extends into the area of the conical part (4).

3. Screw according to Patent Claim 1 or 2, characterized in that the cutting thread is a chipboard screw thread.